# EUROPÄISCHE PATENTANMELDUNG

(11) **EP 4 546 947 A1**
(43) Veröffentlichungstag der Anmeldung: **30.04.2025**
(21) Anmeldenummer: 24207809.5
(22) Anmeldetag: 21.10.2024
(51) Int. Cl.: H05B 6/12, H02J 50/80, H02J 50/90

(54) **VERFAHREN UND STEUEREINHEIT ZUM BETREIBEN EINER ENERGIEVERSORGUNGSEINHEIT**

(30) Priorität: 27.10.2023 DE 102023129687
(71) Anmelder: Miele & Cie. KG, 33332 Gütersloh (DE)
(72) Erfinder: Wilkens, Henrik, 49080 Osnabrück (DE); Ennen, Volker, Dr., 32257 Bünde (DE); Auell, Alexander, 33613 Bielefeld (DE); Hormann, Michael, 33332 Gütersloh (DE); Weber-Lehn, Christian, 49080 Osnabrück (DE)

(57) **Zusammenfassung**

Die Erfindung betrifft ein Verfahren (200) zum Betreiben einer Energieversorgungseinheit (100), die eine Platzierposition (130) aufweist, die zum Laden oder Betreiben eines Mobilgeräts (125) und/oder einem Datenaustausch mit dem Mobilgerät (125) ausgebildet ist, wobei das Verfahren (200) einen Schritt des Erkennens (210) eines Abstands (d) des Mobilgerätes (125) in Bezug zu der Platzierposition (130) und einen Schritt des Ausgebens (220) eines Informationssignals (145), wenn der Abstand (d) des Mobilgeräts (125) zu der Platzierposition (130) ein vorbestimmtes Abstandskriterium erfüllt.

## Beschreibung

Die Erfindung betrifft ein Verfahren und eine Steuereinheit zum Betreiben einer Energieversorgungseinheit, insbesondere eines Kochfeldes gemäß den Hauptansprüchen.

In modernen Küchen sollen Funktionen den Kunden immer einfacher zugänglich sein, wobei die Bedienung von Geräten immer intuitiver ermöglicht werden soll. Hierbei ist auch die Idee von vorbestimmten Lade- bzw. Energieversorgungspositionen sehr populär. Allerdings führt solch eine kabellose Leistungsversorgung zu der Problematik, dass ein entsprechendes Haushaltgerät oder allgemein ein Mobilgerät möglichst präzise auf der Lade- bzw. Energieversorgungsposition abgestellt werden sollte, damit eine möglichst effiziente Übertragung von Energie und/oder Daten zwischen dem Haushaltsgerät und einem weiteren Gerät erfolgen kann. Aus ästhetischen Gründen wird jedoch oftmals vermieden, an Haushaltsgeräten bestimmte Positionen direkt zu kennzeichnen, um einem Nutzer dieses Haushaltsgeräts einen Hinweis auf bestimmte Funktionszonen eines solchen Haushaltsgeräts zu geben.

Der hier vorgestellte Ansatz stellt sich die Aufgabe, ein verbessertes Verfahren und eine verbesserte Steuereinheit zum Betreiben einer Energieversorgungseinheit zu schaffen.

Erfindungsgemäß wird diese Aufgabe durch ein Verfahren und eine Steuereinheit zum Betreiben einer Energieversorgungseinheit, insbesondere einer induktiven Energieversorgungseinheit, besonders bevorzugt eines induktiven Kochfeldes, mit den Merkmalen der Hauptansprüche gelöst. Vorteilhafte Ausgestaltungen und Weiterbildungen der Erfindung ergeben sich aus den nachfolgenden Unteransprüchen.

Der hier vorgestellte Ansatz schafft ein Verfahren zum Betreiben eines als Kochfeld ausgebildeten Energieversorgungseinheit, welche eine Platzierposition aufweist, die zum Laden oder zur Energieversorgung eines Mobilgeräts und/oder einem Datenaustausch mit dem Mobilgerät ausgebildet ist, wobei das Verfahren die folgenden Schritte aufweist:
- Erkennen eines Abstands des Mobilgerätes in Bezug zu der Platzierposition; und
- Ausgeben eines Informationssignals, wenn der Abstand des Mobilgeräts zu der Platzierposition ein vorbestimmtes Abstandskriterium erfüllt.

Unter einer Energieversorgungseinheit wird ein Gerät verstanden, welches durch eine kabellose Kopplung mit einem anderen Gerät dieses andere Gerät mit Energie versorgen kann, beispielsweise durch eine induktive Kopplung. In diesem Sinne kann die Energieversorgungseinheit für das gekoppelte Gerät ein Stromkabel ersetzen, da für einen Betrieb und/oder einen Ladevorgang bereits durch die Energieversorgungseinheit die notwendige Energie bereitgestellt wird. Unter einem Kochfeld kann ganz allgemein ein Haushaltsgerät für die Küche verstanden werden, um ein Kochgeschirr zu erhitzen und darin Speisen zu garen. Unter einem Mobilgerät kann allgemein ein manuell bewegliches Gerät verstanden werden, welches beispielsweise als Haushaltsgerät wie beispielsweise ein Mixer, eine Heißluftfriteuse, ein Auftischofen, eine Mikrowelle oder ein Rührer ausgestaltet ist, jedoch kann auch allgemein ein mobiles Gerät wie beispielsweise ein Mobiltelefon, Tablet oder Laptop eines Nutzers der Energieversorgungseinheit unter einem solchen Mobilgerät verstanden werden. Unter einer Platzierposition kann beispielsweise ein Bereich oder eine Zone des Kochfelds verstanden werden, die eine Zusatzfunktion bietet, insbesondere die ein Laden oder Betreiben des Mobilgeräts, also eine Energieversorgung des Mobilgeräts, beispielsweise zum Aufladen eines Speichers des Mobilgeräts oder Inbetriebnahme eines Rührwerks, und/oder ein Empfangen von Daten des Mobilgerät des und/oder Senden von Daten an das Mobilgerät ermöglicht. Unter einem Erkennen eines Abstands des Mobilgeräts in Bezug zu der Platzierposition kann vorliegend verstanden werden, dass ein Annähern und ein Messen des räumlichen Abstands des Mobilgeräts von der Platzierposition erfolgt. Hierbei kann beispielsweise der Abstand auch einen seitlichen Abstand repräsentieren, um den das Mobilgerät außerhalb einer Begrenzung der Platzierposition auf dem Kochfeld abgesetzt wurde. Unter einem Informationssignal kann vorliegend ein Signal verstanden werden, welches an einem Signalgeber, beispielsweise des Kochfelds oder des Mobilgerätes, ausgegeben wird und welches eine Information liefert, dass ein Abstandskriterium erfüllt ist. Beispielsweise kann ein solches Informationssignal signalisieren, dass das Mobilgerät sich zu weit weg von der Platzierposition befindet, sodass eine Funktion, die an oder in durch die Platzierposition ausgeführt werden soll, nicht effizient realisierbar oder umsetzbar ist.

Der hier vorgestellte Ansatz basiert auf der Erkenntnis, dass durch die Ausgabe eines solchen Informationssignals, das den Abstand des Mobilgerät zu der Platzierposition repräsentiert, besonders intuitiv und technisch einfach einem Nutzer der Energieversorgungseinheit, wie beispielsweise des Kochfelds bzw. des Mobilgerätes angezeigt werden kann. Beispielsweise kann durch ein solches Informationssignal eine Vibration, ein akustisches Signal oder ein Lichtsignal ausgegeben werden, um dem Nutzer des Mobilgerätes bei einem Absetzen des Mobilgerätes auf der Platzierposition direkt einen Hinweis zu geben, dass er bzw. sie auch mit dem Mobilgerät diese Platzierposition getroffen hat. Auf diese Weise kann die zusätzliche Funktionalität des Kochfelds im Bereich der Platzierposition effizient genutzt werden, da eine Fehlpositionierung des Mobilgerätes auf dem Kochfeld zumindest teilweise außerhalb der Platzierposition möglichst gut vermieden werden kann. Speziell bei Kochfeldern, die aus ästhetischen Gründen keinerlei Markierungen auf einer Oberfläche aufweisen, kann die Verwendung eines solchen Ansatzes einen Nutzerkomfort deutlich steigern.

Besonders vorteilhaft ist eine Ausführungsform des hier vorgeschlagenen Ansatzes, bei der im Schritt des Ausgebens das Informationssignal dann ausgegeben wird, wenn der Abstand des Mobilgerätes größer als ein vordefinierter Abstandsschwellwert ist. Eine solche Ausführungsform bietet den Vorteil, dass speziell für den Fall, dass der Abstand des Mobilgeräts größer als ein gewünschter Abstand von der Platzierposition ist, dem Nutzer ein Hinweis darauf gegeben werden kann, dass das Mobilgerät nicht optimal platziert ist. Der Nutzer kann diese Weise das Mobilgerät noch zeitnah umsetzen, damit die Zusatzfunktion des Kochfeldes im Bereich der Platzierposition effizient genutzt werden kann.

Denkbar ist weiterhin eine Ausführungsform des hier vorgeschlagenen Ansatzes, bei der im Schritt des Ausgebens das Informationssignal derart ausgegeben wird, dass einem Nutzer des Mobilgerätes ein optisches, haptisches und/oder akustisches Signal ausgegeben wird, das den Abstand des Mobilgerätes von der Platzierposition repräsentiert. Eine solche Ausführungsform bietet den Vorteil, dem Nutzer ein intuitiv einfach erfassbares Signal ausgeben zu können, welches die korrekte bzw. ungünstige Positionierung des Mobilgerätes auf der Energieversorgungseinheit, also etwa dem Kochfeld, speziell außerhalb der Platzierposition anzeigt.

Von Vorteil ist weiterhin eine Ausführungsform des hier vorgeschlagenen Ansatzes, bei der das Informationssignal derart ausgegeben wird, dass bei einer Bewegung des Mobilgerätes auf die Platzierposition zu oder von der Platzierposition weg eine Intensität eines ausgegebenen Signals variiert wird. Beispielsweise kann durch das Informationssignal eine Vibration oder eine Lautstärke eines Tons derart variiert werden, dass die Intensität zunimmt oder abnimmt, wenn der Nutzer das Mobilgerät näher an die Platzierposition bewegt. Hierdurch kann sehr einfach der Nutzer veranlasst werden, die korrekte Position der Platzierposition auf der Energieversorgungseinheit, also etwa dem Kochfeld, mit dem Mobilgerät zu finden, indem er oder sie das Mobilgerät über beispielsweise dem Kochfeld so lange bewegt, bis die maximale bzw. minimale Intensität des ausgegebenen Signals erreicht ist.

Günstig ist weiterhin eine Ausführungsform des hier vorgeschlagenen Ansatzes, bei der im Schritt des Ausgebens das Informationssignal an eine Signaleinheit in dem Mobilgerät ausgegeben wird. Eine solche Ausführungsform bietet den Vorteil, dass der Nutzer meist speziell das Mobilgerät in Bezug zu der als Kochfeld ausgebildeten Energieversorgungseinheit bewegt, sodass die Ausgabe eines Signals vom oder durch das Mobilgerät vom Nutzer oder der Nutzerin schnell und eindeutig erfasst werden kann.

Sehr vorteilhaft ist eine Ausführungsform des hier vorgeschlagenen Ansatzes, bei der im Schritt des Erkennens ein Abstand eines mobilen Hausgerätes als Mobilgerät in Bezug auf die Platzierposition erkannt wird. Eine solche Ausführungsform bietet den Vorteil, speziell im Haushalt gebräuchliche Geräte unter Verwendung des Energieversorgungsmoduls betreiben oder laden zu können oder mit solchen Geräten eine Kommunikation aufbauen zu können. In modernen Haushalten lässt sich hierdurch der Nutzerkomfort deutlich steigern. Zudem erlaubt das Verfahren gemäß dieser Ausführungsform eine besonders hohe Energieeffizienz, da durch eine bessere Positionierung des mobilen Haushaltsgerätes eine geringere Blindleistung entsteht.

Technisch sehr einfach und präzise arbeitend lässt sich eine Ausführungsform des hier vorgeschlagenen Ansatzes umsetzen, bei der im Schritt des Erkennens der Abstand unter Verwendung zumindest eines Sensors erfolgt, der zur Auswertung einer Signalstärke eines elektromagnetischen Signals, einer Triangulation von einem oder mehrerer Funksignale und/oder zur Auswertung von Lichtsignalen ausgebildet ist. Eine solche Ausführungsform bietet den Vorteil, dass die Verwendung von derartigen Sensoren technisch ausgereift und einfach umzusetzen ist. In einer alternativen oder ergänzenden Ausführungsform des vorgeschlagenen Ansatzes erfolgt das Erkennen des Abstands unter Auswertung einer elektromagnetischen Kopplung zwischen Sender und Empfänger.

Günstig ist weiterhin eine Ausführungsform des hier vorgestellten Ansatzes, bei dem im Schritt des Ausgebens eine Art der Ausgabe einer Information an einen Nutzer des Mobilgerätes variabel einstellbar ist. Eine solche Ausführungsform des hier vorgeschlagenen Ansatzes bietet den Vorteil, einen Benutzer je nach individuellen Vorlieben eine Ausgabe der Information über die korrekte Platzierung des Mobilgerätes ausgeben zu können, sodass die Akzeptanz des hier vorgeschlagenen Ansatzes erhöht werden kann.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Besonders günstig ist auch eine Ausführungsform des hier vorgeschlagenen Ansatzes als Kochfeld mit einer Platzierposition, die zum Laden oder Betreiben eines Mobilgeräts und/oder einem Datenaustausch mit dem Mobilgerät ausgebildet ist, wobei das Kochfeld eine Variante einer hier vorgestellten Steuereinheit aufweist.

Speziell dann, wenn eine Ausführungsform der Energieversorgungseinheit, also speziell des hier vorgestellten Kochfelds, Kochzonen aufweist, die von bei einem nicht in Betrieb befindlichen Kochfeld unkenntlich sind, lässt sich der hier vorgestellte Ansatz auch mit aus ästhetischen Gründen nicht markierten Kochfeldern sehr vorteilhaft umsetzen. Zudem bildet die Positionierungshilfe eine Möglichkeit, das Auffinden einer Platzierposition auch dann sicherzustellen, wenn beispielsweise ein aufgebrachtes Symbol zur Positionierung auf einer Arbeitsplatte durch ein weiteres Objekt überdeckt oder gar nicht vorhanden ist.

Die Erfindung betrifft auch eine Kombination aus erfindungsgemäßer Energieversorgungseinheit, also etwa einem Kochfeld, und einem Mobilgerät. Vorzugsweise verfügt das Mobilgerät über Rollen, über die ein Verschieben des Mobilgerätes zu einer Platzierposition besonders einfach ist. Dies ist insbesondere für schwere Mobilgeräte, wie etwa eine Küchenmaschine, ein Mixer oder dergleichen vorteilhaft. Hierfür ist vorzugsweise eine Mehrzahl von Rollen auf einer Unterseite des Mobilgerätes vorgesehen.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Kochfeldes gemäß einem Ausführungsbeispiel des hier vorgestellten Ansatzes mit einer entsprechenden Steuereinheit; und
- Figur 2: ein Ablaufdiagramm eines Ausführungsbeispiels eines Verfahrens zum Betreiben einer Energieversorgungseinheit, wie etwa eines Kochfeldes.

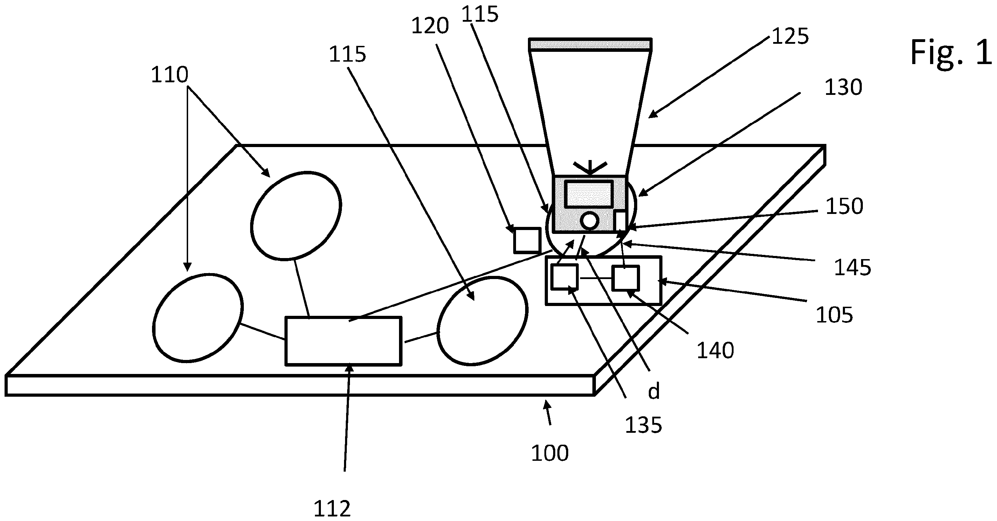

Figur 1 zeigt eine schematische Darstellung einer Energieversorgungseinheit 100, nämlich vorliegend eines Kochfeldes 100, gemäß einem Ausführungsbeispiel des hier vorgestellten Ansatzes mit einer entsprechenden Steuereinheit 105. Das Kochfeld 100 weist dabei mehrere Kochstellen oder Kochzonen 110 auf, die beispielsweise als Standard-Kochstelle ausgestaltet sind und zum Erhitzen von Kochgeschirr ausgelegt sind. Hierzu können die Kochstellen oder Kochzonen 110 durch ein Kochfeld-Ansteuergerät 112 angesteuert werden, wobei auch eine Temperaturstufe eingestellt worden ist, auf welche die jeweils betreffende Kochstelle 110 aufgeheizt werden soll.

Weiterhin umfasst das Kochfeld 100 eine oder mehrere Kochstellen 115 mit einer Zusatzfunktion, die beispielsweise als Ladezone und/oder Energieversorgungszone und/oder Kommunikationsschnittstelle ausgebildet ist oder sind. Hierbei weisen diese Kochstellen 115 zusätzlich zu einer Heizeinheit zum Erhitzen von Kochgeschirr wie die Kochstellen 110 noch eine Funktionseinheit 120 auf, die beispielsweise in der Lage ist, einem Mobilgerät 125, beispielsweise einem mobilen kleinen Haushaltsgerät wie einem Mixer oder einem Rührer oder allgemein auch einem Kommunikationsgerät wie beispielsweise einem Mobiltelefon eine Zusatzfunktion zu bieten. Diese Zusatzfunktion kann beispielsweise eine Ladefunktion sein, sodass beispielsweise ein in der Figur 1 nicht dargestellten Speicher des Mobilgerätes 120 aufgeladen werden kann. Denkbar ist jedoch auch, dass durch die Funktionseinheit 120 eine Datenkommunikation mit dem Mobilgerät 124 aufgebaut werden kann, beispielsweise um Daten von dem Kochfeld 100 unter Verwendung der Funktionseinheit 120 an das Mobilgerät 125 zu übertragen und/oder um Daten von dem Mobilgerät 125 unter Verwendung der Funktionseinheit an das Kochfeld 100 zu übertragen. Wichtig für eine effiziente Übertragung von elektrischer Energie und/oder Daten zwischen der Funktionseinheit 120 und dem Mobilgerät 125 ist dabei jedoch, dass das Mobilgerät 125 an der richtigen Position in Bezug zu der Funktionseinheit 120 platziert wird, wobei diese Position hier als Platzierposition 130 bezeichnet wird. Wird das Mobilgerät 125 auf dieser Platzierposition 130 positioniert, ist günstiger Weise ein Weg zwischen dem Mobilgerät 125 und der Funktionseinheit 120 sehr gering, sodass nur geringe Übertragungsverluste bei der Übertragung von Energie und/oder Daten zwischen der Funktionseinheit 120 und dem Mobilgerät 125 auftreten.

Um nun einen Nutzer bei der Platzierung des Mobilgerätes 125 zu unterstützen, die Platzierposition 130 genau zu treffen, wird nun ein Ausführungsbeispiel der hier vorgestellten Steuereinheit 105 verwendet. Die Steuereinheit 105 umfasst hierbei eine Erkennungseinheit 135, die ausgebildet ist, einen Abstand d zwischen dem Mobilgerät 125 und der Platzierposition 130 zu erkennen. Wird nun dieser Abstand d in einer Ausgabeeinheit 140 ausgewertet und hierbei erkannt, dass dieser Abstand d ein vorbestimmtes Abstandskriterium erfüllt, beispielsweise größer als ein Abstandsschwellwert ist, wird durch die Ausgabeeinheit 140 ein entsprechendes Informationssignal 145 an einem Signalgeber 150 ausgegeben. Diese Signalgeber 150 kann beispielsweise eine Komponente des Mobilgeräts 125 wie beispielsweise ein Lautsprecher oder eine Vibrationseinheit sein, sodass einem Nutzer, der dieses Mobilgerät 125 auf die Platzierposition 130 des Kochfeldes 100 stellt, eine entsprechende akustische und optische Information gegeben werden kann, dass er oder sie das Mobilgerät 125 in die Nähe oder genau auf die Platzierposition 130 absetzen kann. Denkbar ist auch, dass in Abhängigkeit von dem Abstand d eine unterschiedliche Intensität des Informationssignals 145 ausgegeben wird, sodass der Signalgeber, je nach erfasstem Abstand d ein unterschiedliches starkes mechanisches Signal ausgibt. Auf diese Weise lässt sich beispielsweise auch der Nutzer intuitiv bei dem Abstellen des Mobilgerätes 125 auf dem Kochfeld 100 führen, was den Nutzerkomfort deutlich erhöht.

Denkbar ist auch, dass der Signalgeber 150 nicht Teil des Mobilgeräts 125 ist, sondern im oder am Kochfeld 100 integriert ist. Beispielsweise kann ein solcher Signalgeber 150 auch optische Signale ausgeben, beispielsweise um dem Nutzer eine Richtung zu weisen, in welcher er oder Sie das Kleingerät 125 führen sollte, um die Platzierposition 130 optimal zu finden.

Für die Erfassung des Abstandes d kann beispielsweise in der Erkennungseinheit 135 eine NFC-Kommunikation zwischen Station bzw. dem Kochfeld 100 und mobilem Gerät, das hier als Mobilgerät 125 bezeichnet wird und das hier als Haushaltsgerät, z. B. Kaffeemaschine, Wasserkocher, Mixer, etc. ausgestaltet sein kann, aufgebaut werden, um dadurch überhaupt eine Leistungsversorgung des Mobilgerätes 125 über beispielsweise Induktionsspulen des Kochfeldes 100 zu steuern und/oder um Informationen mit dem mobilen Gerät 125 auszutauschen. Wie vorstehend beschrieben wurde ergibt sich dabei als praktisches Problem die geringe Reichweite von NFC-Antennen und die teilweise aus ästhetischen Gründen nicht von außen einsehbare Struktur der Induktionsspulen (bei freiem Flächenkochfeld oder "Concealed Case" einer in einer Arbeitsplatte eingelassenen Induktionsspule). Mit dem hier vorgestellten Ansatz kann jedoch dem Anwender dabei geholfen werden, das mobile Haushaltsgerät bzw. allgemein das Mobilgerät 125 geeignet auf der Station bzw. dem Kochfeld 100 anzuordnen oder abzusetzen, um dabei die Kommunikation mit der stationären NFC-Antenne und/oder eine Leistungsversorgung über die Induktionsspulen sicherzustellen.

Eine wahrnehmbare Positionierungshilfe für die Ausrichtung des Kleingerätes (=mobiles Haushaltsgerät) bzw. Mobilgerätes 125 relativ zum Kochfeld 100 kann sowohl im Kochfeld 100 als auch im Kleingerät bzw. Mobilgerät 125 vorgesehen sein. Im Kochfeld 100 können beispielsweise durch einen Signalgeber Lichter, wie eine Abfolge von Lichtern oder Pfeilmuster oder dergleichen, eine auszuführende Bewegung des Kleingerätes bzw. Mobilgerätes 125 angezeigt werden. Alternativ oder ergänzend kann im Kleingerät bzw. Mobilgerät 125 eine wahrnehmbare Positionierungshilfe durch den Signalgeber 150 bereitgestellt sein. So kann unmittelbar während des Verbindungsaufbaus zwischen Kleingerät bzw. Mobilgerät 125 und Kochfeld 100 eine akustische oder haptische Rückmeldung erfolgen, die dem Anwender direkt zeigt, dass das Kleingerät bzw. Mobilgerät 125 sich bereits am richtigen Ort, also an der Platzierposition 130 befindet. Alternativ kann auch schon vor der Verbindung über eine Rückmeldung eine Positionierungshilfe durch den Signalgeber 150 bereitgestellt werden, beispielsweise über eine sich verändernden Vibration am Kleingerät bzw. Mobilgerät 125, oder über einen Leuchtkranz am Kleingerät bzw. Mobilgerät 125 mit unterschiedlicher Helligkeit, sodass der Nutzer oder die Nutzerin beispielsweise das Mobilgerät 125 an eine dunkle Seite eines Leuchtkranzes schieben soll. Auch ein sich veränderndes akustisches Signal am Kleingerät bzw. Mobilgerät 125 kann eine Nähe zum richtigen Ablageort bzw. der Platzierposition 130 anzeigen.

Eine haptische Rückmeldung erfolgt günstigerweise direkt am Griff des Kleingerätes bzw., Mobilgerätes 125 den der Nutzer bzw. die Nutzerin beim Tragen des Kleingerätes bzw. Mobilgerätes 125 generell berührt.

Die Umsetzung einer Positionierungshilfe über Licht im Kochfeld 100 kann über einige Lichtmarkierungen erfolgen. Eine besonders günstige Ausführung des hier vorgestellten Ansatzes kann jedoch in einer akustischen und/oder haptischen Rückmeldung innerhalb des Kleingerätes bzw. Mobilgerätes 125 umgesetzt werden. Eine Rückmeldung bei erfolgter NFC-Verbindung ließe sich besonders einfach realisieren, da das Empfangen von Daten direkt eine solche Rückmeldung triggern kann. Alternativ kann auch schon eine Annäherung an die NFC-Antenne durch haptisches und/oder akustisches Feedback erkennbar realisiert werden, beispielsweise über eine Erkennung der Signalstärke, oder über Triangulation mit auf Funk beruhenden Positionssensoren, oder optischen Positionssensoren, wobei dann insbesondere diese Positionssensoren als Teil der Erkennungseinheit 135 betrachtet werden können. Günstigerweise kann auch eine Intensität und/oder ein Muster der haptischen/akustischen Rückmeldung über eine Benutzerschnittstelle bzw. den Signalgeber vorbestimmt oder variabel eingestellt werden.

Der hier vorgestellte Ansatz ist besonders vorteilhaft für den "Hidden Case" einer Arbeitsplatte mit integriertem Induktionskochfeld einsetzbar, bei dem der Ort der Spulen besonders schlecht von außen erkennt werden kann. In diesem Fall kann eine hier vorgestellte Positionierungshilfe den Nutzer besonders einfach zu der richtigen Position für eine erfolgreiche Leistungsübertragung und/oder Datenkommunikation durch die Induktionsspulen oder eine entsprechende Funktionseinheit führen.

Die haptische und/oder akustische Rückmeldung, wenn eine Verbindung mit dem Kochfeld 100 durch das Kleingerät bzw. Mobilgerät 125 aufgebaut wurde, ermöglicht eine Rückmeldung an den Nutzer, ohne dass dieser sich das Kleingerät bzw. Mobilgerät 125 konzentriert anschauen braucht. Dies erhöht einen Nutzerkomfort des hier vorgestellten Ansatzes.

Die Positionierungshilfe bei einer Annäherung an den richtigen Ort für die Daten- und Leistungsübertragung ist hierbei in bisherigen Lösungsansätzen gar nicht vorgesehen, so dass den hier vorgestellten Ansatz erstmals ein intuitives Auffinden des richtigen Ortes für das Mobilgerät durch den Nutzer möglich ist. Dabei erlaubt der hier vorgestellte Ansatz insbesondere für ein in die Arbeitsplatte integriertes Kochfeld ein einfaches Auffinden der richtigen Position für die Zusatzfunktion, ohne dass hierfür extra Beleuchtungen und dergleichen am Kochfeld vorgesehen sein brauchen. Durch das Feedback an den Nutzer kann auch direkt oder indirekt dem Nutzer signalisiert werden, dass eine Verbindung hergestellt wurde und damit auch tatsächlich Leistung übertragen wird, ohne dass eine weitere manuelle Interaktion mit dem Nutzer notwendig ist.

Schließlich erlaubt der hier vorgestellte Ansatz eine Rückmeldung ein Positionierungsfeature, welches auf Seiten des Kochfeldes bis auf die optionalen Positionssensoren keine baulichen Veränderungen erfordert.

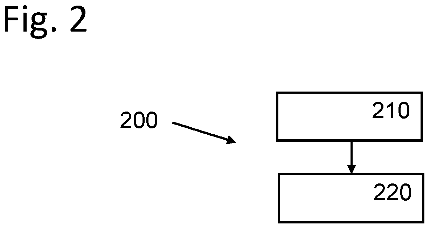

Figur 2 zeigt ein Ablaufdiagramm eines Ausführungsbeispiels eines Verfahrens 200 zum Betreiben einer Energieversorgungseinheit, nämlich vorliegend eines Kochfeldes, das eine Platzierposition aufweist, die zum Laden eines Mobilgeräts und/oder einem Datenaustausch mit dem Mobilgerät ausgebildet ist, wobei das Verfahren 200 einen Schritt 210 des Erkennens eines Abstands des Mobilgerätes in Bezug zu der Platzierposition und einen Schritt 220 des Ausgebens eines Informationssignals aufweist, wenn der Abstand des Mobilgeräts zu der Platzierposition ein vorbestimmtes Abstandskriterium erfüllt.

## Patentansprüche

1. Verfahren (200) zum Betreiben einer induktiven Energieversorgungseinheit, wie etwa eines Kochfeldes (100), die eine Platzierposition (130) aufweist, die zur Energieversorgung eines Mobilgeräts (125) und/oder einem Datenaustausch mit dem Mobilgerät (125) ausgebildet ist, wobei das Verfahren (200) die folgenden Schritte aufweist:
- Erkennen (210) eines Abstands (d) des Mobilgerätes (125) in Bezug zu der Platzierposition (130); und
- Ausgeben (220) eines Informationssignals (145), wenn der Abstand (d) des Mobilgeräts (125) zu der Platzierposition (130) ein vorbestimmtes Abstandskriterium erfüllt.

2. Verfahren (200) gemäß Anspruch 1, bei dem im Schritt (220) des Ausgebens das Informationssignal (145) dann ausgegeben wird, wenn der Abstand (d) des Mobilgerätes (125) größer als ein vordefinierter Abstandsschwellwert ist.

3. Verfahren (200) gemäß einem der vorangegangenen Ansprüche, bei dem im Schritt (220) des Ausgebens das Informationssignal (145) derart ausgegeben wird, dass einem Nutzer des Mobilgerätes (125) ein optisches, haptisches und/oder akustisches Signal ausgegeben wird, das den Abstand (d) des Mobilgerätes (125) von der Platzierposition (130) repräsentiert.

4. Verfahren (200) gemäß einem der vorangegangenen Ansprüche, bei dem das Informationssignal (145) derart ausgegeben wird, dass bei einer Bewegung des Mobilgerätes (125) auf die Platzierposition (130) zu oder von der Platzierposition (130) weg eine Intensität eines ausgegebenen Signals variiert wird.

5. Verfahren (200) gemäß einem der vorangegangenen Ansprüche, bei dem im Schritt (220) des Ausgebens das Informationssignal (145) an einen Signalgeber (150) in dem Mobilgerät (125) ausgegeben wird.

6. Verfahren (200) gemäß einem der vorangegangenen Ansprüche, bei dem im Schritt (210) des Erkennens der Abstand (d) eines mobilen Hausgerätes als Mobilgerät (125) in Bezug auf die Platzierposition (130) erkannt wird.

7. Verfahren (200) gemäß einem der vorangegangenen Ansprüche, bei dem im Schritt (210) des Erkennens der Abstand (d) unter Verwendung zumindest eines Sensors erfolgt, der zur Auswertung einer Signalstärke eines elektromagnetischen Signals, einer Triangulation von einem oder mehrerer Funksignale und/oder zur Auswertung von Lichtsignalen ausgebildet ist.

8. Verfahren (200) gemäß einem der vorangegangenen Ansprüche, bei dem im Schritt (220) des Ausgebens eine Art der Ausgabe einer Information an einen Nutzer des Mobilgerätes (125) variabel einstellbar ist.

9. Steuereinheit (105), die ausgebildet ist, um die Schritte (210, 220) des Verfahrens (200) gemäß einem der vorangegangenen Ansprüche in entsprechenden Einheiten (135, 140) auszuführen und/oder anzusteuern.

10. Computer-Programmprodukt mit Programmcode zur Durchführung des Verfahrens (200) nach einem der Ansprüche 1 bis 8, wenn das Computer-Programmprodukt auf einer Steuereinheit (105) gemäß Anspruch 9 ausgeführt wird, wenn das Verfahren (200) auf einer Vorrichtung und/oder Steuereinheit (105) ausgeführt wird.

11. Energieversorgungseinheit (100), insbesondere Kochfeld, mit zumindest einer Platzierposition (130), die zum Laden eines Mobilgeräts (125) und/oder einem Datenaustausch mit dem Mobilgerät (125) ausgebildet ist, wobei die Energieversorgungseinheit (100) eine Steuereinheit (105) gemäß Anspruch 9 aufweist.

12. Energieversorgungseinheit (100) gemäß Anspruch 11, welche als Kochfeld ausgebildet ist und wobei das Kochfeld (100) Kochzonen (110, 115) aufweist, die von bei einem nicht in Betrieb befindlichen Kochfeld (100) unkenntlich sind.
